# EUROPEAN PATENT APPLICATION

(11) **EP 1 128 281 A2**
(43) Date of publication of application: **29.08.2001**
(21) Application number: 01101923.9
(22) Date of filing: 27.01.2001
(51) Int. Cl.: G06F 17/30

(54) **System and method for accessing non-relational data by relational access methods**

(30) Priority: 25.02.2000 EP 00103965
(71) Applicant: International Business Machines Corporation, Armond, NY 10504 (US)
(72) Inventor: Franzki, Ingo, 71101 Schönaich (DE); Mild, Wilhelm, 71032 Böblingen (DE)
(74) Representative: Klein, Hans-Jörg

(57) **Abstract**

The present invention relates to a system and method for accessing non-relational data stored in records on a host system by a relational access method. The implementation of a relational interface component allows data transformation and type conversion and gives a relational interface to non-relational data.

An integrated mapping component is used to define the relational structure of non-relational records or data. This relational structure is used by the application program or data base request. The mapping component allows to define columns with their characteristic (i.e. byte offset, data type, length). The definitions can be grouped in maps equivalent with a relational table and views represents a subset of the columns defined in a map. It can be defined multiple different maps and views for one record.

The information of the maps, columns and views are stored in one repository. The inventive interface component is using the definitions stored in the repository to access the non-relational data and splits the records.

Preferably based on the SQL language non-relational data like VSAM data can be accessed from any program using the relational interface component.

The original no-relational data remain unchanged and older programs works without changes.

The present invention gives new possibilities for host based programs using non-relational access methods and supports the integration transition or migration into relational environment.

## Description

The present invention relates to a system and method for accessing non-relational data stored in records on a host system. More specifically the present invention relates to a system and method for accessing non-relational data or records-by means of relational application programs or relational access methods.

Application programs in host environments use access methods for reading and writing data. Many host operating systems, especially the IBM VSE/ESA operating system, offer non-relational access methods (IBM VASAM). Non-relational access methods do not use or take care of any structure within the record except a key path. Each application program using such records or data needs to define its own view for the data managed by the non-relational access method. Different programs use different methods how to manage the structure for storing data. Therefore, developer of application programs needs special knowledge about the operating system for writing records into a storage medium.

In todays IT environments, standard interfaces become more and more important for application developer. In e-business applications the standard interfaces for relational databases like ODBC and the IBM DB2 Call Level Interface are well known and used for data access.

Application programs using a standardized interface for relational data bases are unable to access records stored in a non-relational way.

In the client/server environment independent software vendors offer a client/server architecture allowing access to non-relational managed records or data by application programs designed to access relational managed records or data only. A disadvantage of such an architecture is that the client as well the server requires additional programs for achieving the communication between the relational application program stored on the client site and the non-relational access method stored on the server site. Furthermore, a further disadvantage is that each client system requires its own program. Finally,programs installed on the server as well on the client needs the same version.

It is therefore object of the present invention to provide a system and method for accesing non-relational records or data by programs using relational access method avoiding the disadvantages of the prior art systems.

This object is solved by the features of the independent claims 1,11,12,13 and 15. Further embodiments of the invention are laid down in the subclaims.

The inventive method for accessing non-relational data stored in records by means of programs using relational access methods starts with the step of gathering information which describes the non-relational data structure of the record. Preferably, this information is obtained from sourcode of the program. After having this non-relational structure of the record, at least one map for each record has to be generated which maps the non-relational data structure into relational data structure having columns and rows. The maps will be stored into a storage medium, eg.repository. A further emodiment of the present invention allows to generate views which are based on the map information. The view includes a subset of columns defined in the map.
An interface component is implemented for receiving relational requests and executing them. The interface component accesses the map specified in the relational request, retrieves column information for accessing the data element from the map and generates an optimised non-relational request using column information for accessing said data element. The optimized non-relational request is executed via a non-relational access method.

By the implementation of host side interface accesses to non-relational data can be made via standardized commands like SQL. The integration, transition or migration from the non-relational into relational environment is herewith given without requiring additional program products as well as adaptions of the original non-relational data.

The present invention will be descriped in more detail by a preferred embodiment of the present invention in connection with accompanied drawings in which
- Fig. 1: shows a prior art host system using non-relational data
- Fig. 2: shows an example for mapping a non-relational record into relational view according to the present invention
- Fig. 3: shows an example for generating a columnm based on the record structure as shown in Fig. 2 according to the present invention
- Fig. 4 A-D: shows the inventive method for generating maps and views based on the record structure as shown in Fig. 2
- Fig. 5: shows the inventive interface architecture for mapping non-relational record structure into a relational view
- Fig. 6: shows the inventive method for accessing non-relational data by programs using relational access methods

The implementation of an inventive relational interface (e.g. VSAMSQL) component allows data transformation and type conversion and gives a relational interface to non-relational data.
An integrated mapping component is used to define the relational structure of non-relational records or data. This relational structure is used by the application Programm or data base request.

The mapping component allows to define columns with their characteristic (i.e. byte offset, data type, length). The definitions can be grouped into maps equivalent with a relational table and views represents a subset of the columns defined in a map. It can be defined multiple different maps and view for one record.

The information of the maps, columns and views are stored in one repository. The inventive interface is using the definitions stored in the repository to access the non-relational data and splits the records.

Preferably based on the SQL language non-relational data like VSAM data can be accessed from any program using the relational interface component.
The original no-relational data remain unchanged and older programs works without changes.

The present invention allows access to non-relational managed data or records in a relational manner (in tables/maps and views) by standardized requests like SQL commands using the inventive relational interface component (e.g. VSAMSQL).

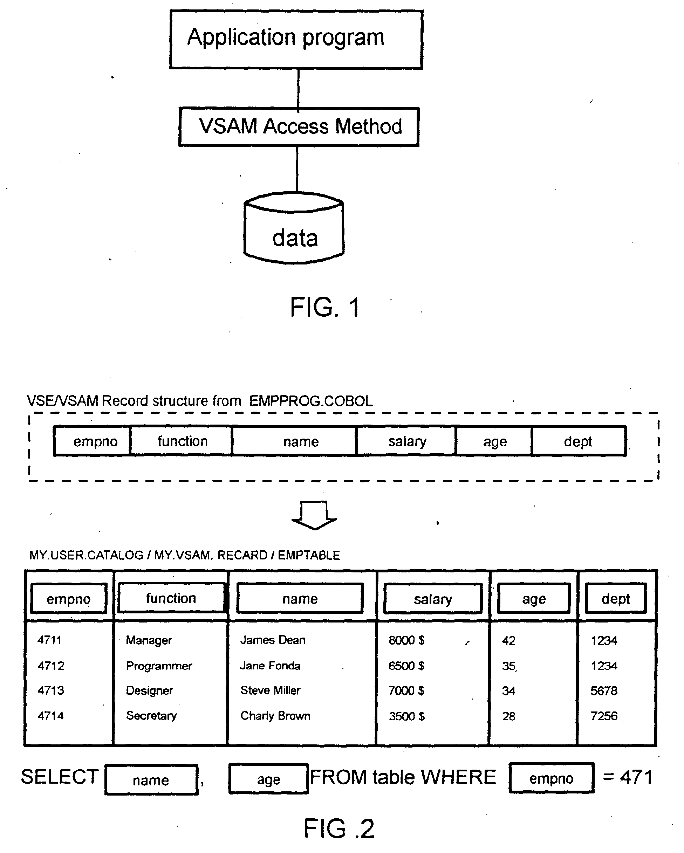

Fig. 1 refers to a host system using non-relational data. The host system contains a operating system which provides a non-relational access method for writing and reading data. Non-relational access methods do not use or take care of any structure within the record except a key path. Each program using such records or data needs to define its own view for the data managed by the non-relational access method. Different programs use different methods how to manage the structure for storing data

Fig. 2 refers to a VSAM record structure EMPPROG.COBOL. The VSAM data have a non-relational structure. The record consists of the data elements, e.g. data empno (= employee numer), function, name (= employee name), salary, age, dept (department). Only the application program itself knows the order, length and structure of each data element stored in the record.

Each record structure has to be transformed into relational view. In the preferred embodiment of the present invention the relational view is defined by rows and columns. The data contained in the VSAM record must be transformed in a column and row view representation. For example the columns are defined by employee number, function, name, salary, age and department. Each row within each column contains data concerning a certain employee. The relational representation which is mainly used in relational data bases is being accessed by SQL requests. SQL requests may be created by specifying a certain column from a certain table with a selected row, e.g. select "name, age (column)" from table EM table where empno =471(row). The SQL requests is being sent to the VSAM interface component VSAMSQL.

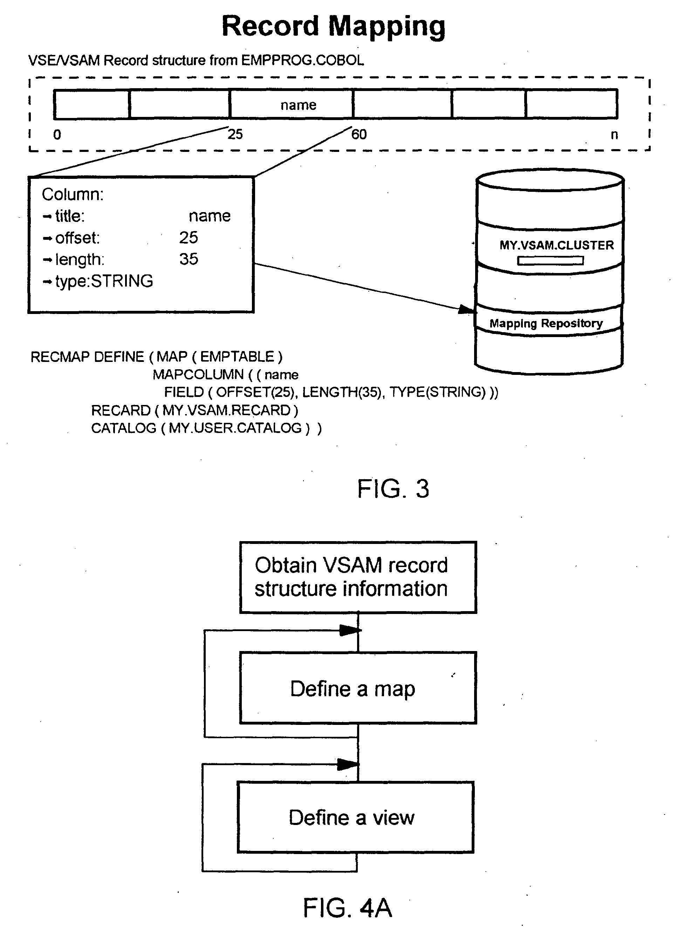

Fig. 3 shows in detail how a column according to Fig. 2 is generated. Each VSAM record consists of several data elements which are defined by title, offset, length and type.
Each data element which should be addressable must be defined as column. For example the data element with the offset 25, length 35, type: String, title: name will be defined as a column and is stored into Mapping Repository. The column is accessable over MAP name EMPTABLE.

Fig. 4 A shows a method for generating maps and views according to the present invention based on the record structure as shown in FIG 2. To enable the work with VSAM data via the new inventive interface VSAMSQL, the process of structuring/mapping data must be done first. This step also called record mapping, defines the structure of the VSE/VSAM record and stores it in a Mapping Repository. (In a relational database such information are stored in the database directory). Each part of a VSAM record that should be addressable as an independent data element via the VSAMSQL interface, must be defined as column into a so called map via the system integrated mapping utility RECMAP. A column definition contains the title of the column, the offset within the record, the length of the field and the data type (e.g. STRING, INTEGER). The characteristics for the columns are stored in the Mapping repository. A map can contain one ore more columns related to one VSAM record. However it can be defined multiple maps for one VSAM record. To use only a part of columns defined in a map the construct of view is used. A view contains a subset of columns defined in a map. Also multiple views can be defined for a map. For example the view may contain name and salary or name and function or name, function and age.

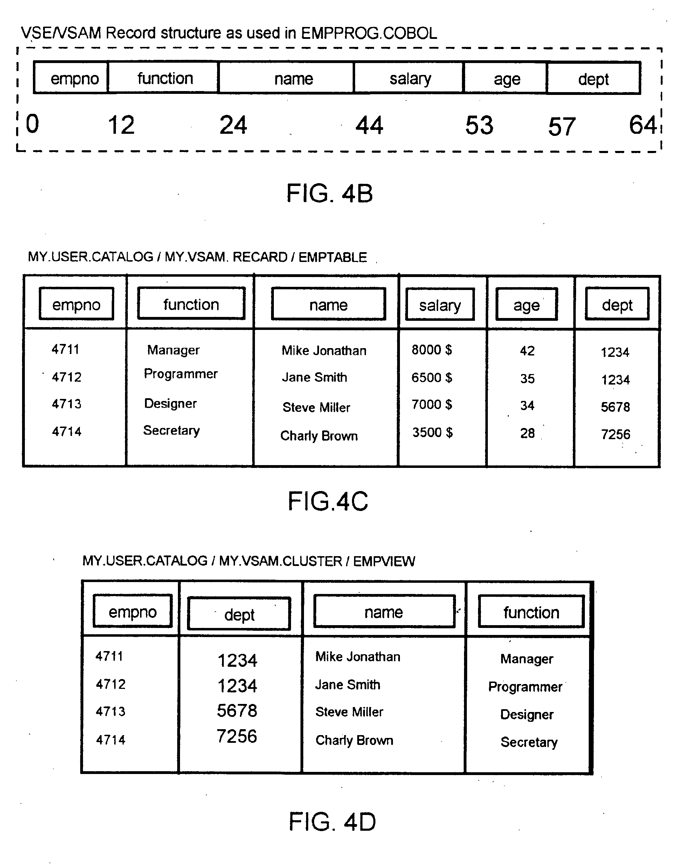

Fig. 4 B shows a sample VSAM record(non-relational record) which is mapped according to the present invention supported by the RECMAP utility as follows:
With the RECMAP utility a map is defined with the name EMTABLE for the structure of Fig. 4 B which contains following columns :
empno field (offset (0), length (12), Type (integer)
function field(offset(12),length (12), Type (string)
name field (offset (24), lengt(20), type (string)
salary field (offset(44), length (9), Type (integer)
age field (offset(53), length (4), type(integer)
dept field (offset(0),length (12), type(packed).

This information is stored in the mapping repository and will be used by the VSAMSQL Interface.

The result is a logical relational table accessable via VSAMSQL interface using the information stored in the mapping repository as shown above (see Fig. 4 C).

Based on the sample of Fig. 4 C a view is defined as follows:

Supported by the RECMAP utility a view is defined with the name EMPVIEW based on the map EMTABLE which contains a subsets of columns defined in the map as follows:
RECMAP DEFINE (MAP(EMTABLE) VIEW(EMPVIEW)
VIEWCOLUMN(empid, REFCOLUMN(empno))
VIEWCOLUMN(department, REFCOLUMN(dept))
VIEWCOLUMN(FIRST NAME, REFCOLUMN(name))
VIEWCOLUMN(function, REFCOLUMN(function))

Views may be defined according to the system's requirements.

The result is a logical relational view, accessable via VSAMSQL interface using the information stored in the mapping repository (see Fig.4D).

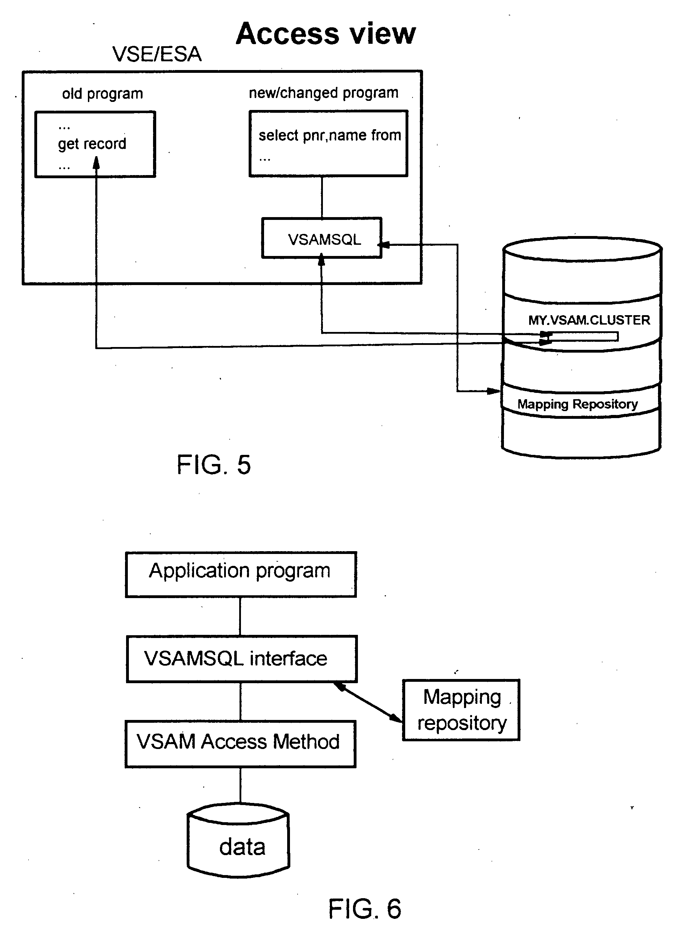

Fig. 5 shows the access view to VSAM data by using inventive VSAMSQL interface in the IBM VSE/ESA environment. The original VSAM data remain unchanged, older programs works without changes.The VSAMSQL interface uses the same VASAM data, but the access is done on column level. The interface is able to do data transformation and type conversion. Based on the SQL language VSAM data can be accessed from any VSE/ESA program using the VSAMSQL interface.The VSAMSQL interface is preferably based on the DB2 CLI standard interface. When new program issues SQL statements against VSAM data the VSAMSQL interface translates the SQL statement into VSE/VSAM requests. Together with the mapping definitions from the Mapping Repository it splits the record into predefined columns. Then the columns are accessed independent from each other. All VSAM related logic is handled internally and is completely hidden from the programming interface. Additionally the requests are optimized regarding to VSAM specificas, for example by automatically selecting the best index key.

Fig. 6 shows the inventive method for accessing non-relational data by programs using a relational access method.

The application Programm designed to relational access methods uses for example a dynamic SQL request with the prefix VSAMSQL to redirect the request to the inventive interface VSAMSQL.

The VSAMSQL interface analyses the request, accesses to the Mapping Repository which contains the maps and views, identifies the selected map or view, retrieves the column information (offset, length) from the selected map or view, generates an optimised VSAM request and executes the optimised VSAM request by the VSAM access method.

## Claims

1. Method for accessing non-relational data stored in records by means of programs using relational access methods, whereby each record contains at least one data element, comprising at least following steps:
gathering information which describes the non-relational data structure of said record
generating at least one map for each of said record or parts therefrom which maps said non-relational data structure into relational data structure having columns and rows
storing said maps into a storage medium
receiving relational request and executing said request by an interface component with at least following steps:
accessing the map specified in said relational request retrieving column information for accessing said data element from said map
generating an optimised non-relational request using column information for accessing said data element
executing said optimized non-relational request via a non-relational access method.

2. Method according to claim 1, wherein said non-relational structure information is obtained from the source code , the COBOL copybook or c header file.

3. Method according to claim 1, comprising the further steps:
generating a view based on said map which includes a subset of columns defined in said map
storing said view into a storage medium.

4. Method according to claim 1, wherein each defined addressable data element in said record is defined as an own column.

5. Method according to 1, wherein said colunm is defined by an arbitrary name for that column, offset within said record , length of field in said record and data type.

6. Method according to claim 4, wherein said record or parts therefrom is defined into multiple maps.

7. Method according to claim 2, wherein said map or parts therefrom is defined into multiple views containing a subset of columns defined in said map.

8. Method according to 1 or 2, wherein said step of generating said map and said step of generating said views is automatically made by a mapping tool.

9. Method according to 1, wherein said maps and said views are stored in a Mapping Repository.

10. Method according to claim 1, wherein said relational request is a SQL request which is specified by or more columns and the name of the related map and/or view.

11. Method for accessing non-relational data stored in records which includes at least one data element by means of programs using a relational access method, wherein each of said record or part therefrom is stored in a map in a relational view having columns and rows, said method comprising the following steps:
receiving relational request and executing said request by an interface component comprising at least following steps:
accessing the map specified in said relational request retrieving column information for accessing said data element from said map
generating an optimised non-relational request using said column information for accessing said data element
executing said optimized non-relational request via a non-relational access method.

12. System for accessing non-relational data stored in records via a program using relational access method for carrying out the method according to claim 1 to 10 comprising at least following components:
a data processing system
a repository containing maps and views
an interface component for mapping relational requests into non-relational requests by means of information from said maps or views
an application program using relational requests by means of relational access method.

13. Method for generating a map for use in a system according to claim 12 comprising following steps:
gathering information which describes the non-relational data structure of said record
generating at least one map for each of said record or parts therefrom which maps said non-relational data structure into relational data structure having columns and rows
storing said maps into a storage medium.

14. Method according to claim 13 comprising the further steps:
generating a view based on said map which includes a subset of data elements defined in said map
storing said view into a storage medium

15. Computer program product stored in the internal memory of a digital computer, containing parts of software code to execute the method in accordance with claims 1 to 10 or 11 or 13 to 14 when said program product is run in said computer.
